**Europäisches Patentamt**

**European Patent Office**

**Office européen des brevets**

(11) Veröffentlichungsnummer: **0 484 534 A1**

(12) **EUROPÄISCHE PATENTANMELDUNG**
veröffentlicht nach Art. 158 Abs. 3
EPÜ

(21) Anmeldenummer: **91902308.5**

(22) Anmeldetag: **22.05.90**

(86) Internationale Anmeldenummer:
**PCT/SU90/00129**

(87) Internationale Veröffentlichungsnummer:
**WO 91/18668 (12.12.91 91/28)**

(51) Int. Cl.⁵: **B01J 8/02**

(43) Veröffentlichungstag der Anmeldung:
**13.05.92 Patentblatt 92/20**

(84) Benannte Vertragsstaaten:
**DE DK FR GB IT**

(71) Anmelder: **ASTANOVSKY, Lev Zalmanovich**
**mikroraion Dzerzhinets, 2-36, Moskovskaya**
**obl.**
**Pushkino, 141200(SU)**
Anmelder: **ASTANOVSKY, Dmitry Lvovich**
**mikroraion Dzerzhinets, 2-36, Moskovskaya**
**obl.**
**Pushkino, 141200(SU)**
Anmelder: **ANDRIANOV, Viktor Vasilievich**
**ul. Koneva, 11-17**
**Cherkassy, 257005(SU)**
Anmelder: **BODROV, Dmitry Mikhailovich**
**Bolotnikovskaya ul., 42-3-19**
**Moscow, 113209(SU)**
Anmelder: **ROMASHEVSKY, Vladimir**
**Borisovich**
**ul. Profsojuznaya, 83-156**
**Sverdlovsk, 620010(SU)**
Anmelder: **KIPRIYANOV, Jury Ivanovich**
**Slavyansky bulvar, 7-1-90**
**Moscow, 121352(SU)**

(72) Erfinder: **ASTANOVSKY, Lev Zalmanovich**
**mikroraion Dzerzhinets, 2-36, Moskovskaya**
**obl.**
**Pushkino, 141200(SU)**
Erfinder: **ASTANOVSKY, Dmitry Lvovich**
**mikroraion Dzerzhinets, 2-36, Moskovskaya**
**obl.**
**Pushkino, 141200(SU)**
Erfinder: **ANDRIANOV, Viktor Vasilievich**
**ul. Koneva, 11-17**
**Cherkassy, 257005(SU)**
Erfinder: **BODROV, Dmitry Mikhailovich**
**Bolotnikovskaya ul., 42-3-19**
**Moscow, 113209(SU)**
Erfinder: **ROMASHEVSKY, Vladimir Borisovich**
**ul. Profsojuznaya, 83-156**
**Sverdlovsk, 620010(SU)**
Erfinder: **KIPRIYANOV, Jury Ivanovich**
**Slavyansky bulvar, 7-1-90**
**Moscow, 121352(SU)**

(74) Vertreter: **Füchsle, Klaus, Dipl.-Ing. et al**
**Hoffmann . Eitle & Partner Patentanwälte**
**Arabellastrasse 4**
**W-8000 München 81(DE)**

(54) **VORRICHTUNG ZUR DURCHFÜHRUNG KATALYTISCHER WIRBELBETTVERFAHREN.**

㊼ Bei dem erfindungsgemässen Apparat sind im Inneren des zweiten ringförmigen Raumes (9), der in axialer Richtung durch Trennwände (10, 11), in radialer Richtung aber durch die Innenfläche des ersten Ringschusses (6) und die Aussenfläche des zweiten Ringschusses (7) begrenzt ist, Kanäle (16) ausgebildet. Jede Wand (15) des Kanals (16) weist in der zur Längsachse ($O_1$-$O_1$) des Apparates senkrechten Ebene die Form einer Flachspirale auf, die um einen auf der Achse ($O_1$-$O_1$) des Apparates liegenden Punkt verdreht ist.

Technisches Gebiet

Die Erfindung bezieht sich auf die chemische Industrie, insbesondere auf Apparate zur Durchführung eines katalytischen Prozesses in einer körnigen Schicht.

Zugrundeliegender Stand der Technik

In einer Vielzahl von katalytischen Prozessen, die in der chemischen, petrolchemischen, metallurgischen Industrie und in anderen Industriezweigen durchgeführt werden, wird eine grosse Menge von gasförmigen und flüssigen Medien verarbeitet, wobei eine riesige Menge von Energieressourcen verbraucht wird und viele Schadstoffe in die Umgebung ausgelassen werden. Die Ausrüstung zur Durchfuhrung dieser Prozesse ist in der Regel sperrig und metallintensiv.

Mit dem Zweck, den Energieaufwand und die Kapitalanlagen zu verringern und Schadstoffemissionen in die Umgebung zu reduzieren, wird eine ständige Suche nach der Vervollkommnung des Prozesses der Katalyse und der Ausrüstung für deren Realisierung durchgeführt. Herkömmlicherweise bringt man die Prozesse der heterogenen Katalyse in Apparaten axialen oder radialen Typs zustande.

Ein Apparat vom axialen Typ, beispielsweise der Reaktor für Ammoniaksynthese, enthält ein vertikal aufgestelltes Gehäuse mit einem am Boden des Gehäuses befestigt ist Synthesegas-Zuleitungsstutzen und einem Reaktionsgas-Ableitstutzen (GB, A, Nr. 1194269).

Innerhalb des Gehäuses ist entlang seiner Längsachse ein Ringschuss angeordnet, derart, dass zwischen seiner Aussenfläche und der Innenfläche des Gehäuses ein ringförmiger Raum gebildet ist, der mit dem Gaszuleitungsstutzen in Verbindung steht. Der Innenhohlraum des Ringsschusses ist von dem ringförmigen Raum isoliert und steht mit dem Rohrzwischenraum eines Wärmeaustauschers in Verbindung, welcher am Ringschuss befestigt ist und sich im oberen Gehäuseteil befindet.

Der genannte Hohlraum des Ringschusses ist durch perforierte Trennwände in vier Sektionen unterteilt. Auf jeder der Trennwände ist eine Schicht körnigen Katalysators aufgebracht. Entlang der Längsachse des Gehäuses ist ein Rohr angeordnet, das an dem einen Ende mit dem Hohlraum des Ringschusses, welcher unterhalb der letzten Sektion in der Bewegungsrichtung des Reaktionsgases liegt, verbunden ist und an dem anderen Ende mit dem Röhrenraum des Wärmeaustauschers in Verbindung steht. Im oberen Gehäuseteil sind Stutzen für die Zuleitung von Härtungs-Synthesegas angebracht, von denen jeder mit der Sektion in der Zone über dem Katalysator in der Bewegungsrichtung des Synthesegases in Verbindung steht.

Der Strom des Synthesegases tritt aus dem Stutzen für dessen Zuleitung in den ringförmigen Raum ein und wird, nachdem er den Rohrzwischenraum des Wärmeaustauschers passiert hat, durch das aus dem Apparat durch den Röhrenraum des Wärmeaustauschers strömende Reaktionsgas erwärmt. Danach durchströmt das erwärmte Synthesegas aufeinanderfolgend von oben nach unten die vier Sektionen, in jeder von denen auf dem Katalysator eine exotherme Reaktion der Ammoniaksynthese verläuft.

Um einen maximalen Ammonio gehalt des Reaktionsgases zu erzielen, ist eine Abführung der Reaktionswärme erforderlich, die durch die Zuleitung von Härtungsgas über die Stutzen in jede der Sektionen in die Zone über dem Katalysator gewährleistet wird.

Die begrenzte Abmessung des Querschnitts des Gehäuses, die durch die Möglichkeiten seiner Herstellung und seines Transports bedingt ist, und ein hoher Synthesegasdurchsatz, der durch die Leistung des Apparates bedingt ist, haben hohe lineare Geschwindigkeiten bei der Bewegung des Synthesegases durch die körnige Schicht und einen hohen hydraulischen Widerstand der Schicht zur Folge, was einen erhöhten Energieaufwand erfordert und dazu zwingt, einen grobkörnigen Katalysator zu verwenden, welcher eine kleine Oberfläche der Wechselwirkung mit dem Synthesegas aufweist. Eine derartige Konstruktion des Apparates hat einen verminderten Arbeitswirkungsgrad, der durch die Verdünnung des Reaktionsgases mit Härtungsgas bedingt ist, was den Ammoniakgehalt des Reaktionsgases herabsetzt.

Zur Verminderung des hydralischen Widerstandes der körnigen Schicht des Katalysators ist ein Apparat zur Durchführung des katalytischen Prozesses der Ammoniaksynthese vorgeschlagen worden (FR, A, Nr. 1409120).

Der bekannte Apparat stellt ein vertikales zylindrissches Gehäuse dar, in dessen Innerem entlang seiner Längsachse ein erster Ringschuss angeordnet ist, der in Form eines Topfes ausgebildet ist, welcher mit dem Boden dem Eintrittsstutzen für die Synthesegaszuleitung zugewandt ist. Der Eintrittsstutzen ist im oberen Gehäuseteil angebracht und steht mit dem ringförmigen Raum zwischen der Innenfläche des Gehäuses und der Aussenfläche des ersten Ringschusses in Verbindung, während der Austrittsstutzen im unteren Gehäuseteil angebracht ist.

Innerhalb des ersten Ringschusses sind entlang seiner Längsachse aufeinanderfolgend in Strömungsrichtung des Synthesegases ein Röhrenwärmeaustauscher und ein erster perforierter Ringschuss angeordnet, dessen Aussenfläche mit der Innenfläche des topfförmigen Ringschusses einen ringförmigen Raum bildet, der durch eine zur Achse senkrechte und an der Innenfläche des ersten Ringschusses befestigte Trennwand geteilt ist. Konzentrisch zum ersten perforierten Ringschuss ist in dessen Innerem ein zweiter perforierter Ringschuss angeordnet, der mit der Innenfläche des ersten perforierten Ringschusses einen ringförmigen Raum bildet, welcher mit einem körnigen Katalysator ausgefüllt und durch Trennwände in drei Sektionen unterteilt ist.

Entlang der Längsachse des Apparates ist ein rohrförmiges Element angeordnet, das über ein Ende mit dem Rohrzwischenraum des Wärmeaustauschers in Verbindung steht, während sein anderes Ende blind ausgeführt ist, wobei die Seitenwände dieses Endes perforiert sind.

Zur Kühlung des aus der ersten Sektion austretenden Reaktionsgases ist ein Härtungsgassammler vorgesehen, der mit dem am Boden des topfförmigen Ringschusses angebrachten Stutzen in Verbindung steht, und zur Kühlung des aus der zwiten Sektion austretenden Gases ist ein Härtungsgassammler vorgesehen, der mit dem im Boden des Apparatgehäuses angebrachten Stutzen in Verbindung steht.

Bei der Arbeit des Apparates strömt das Synthesegas durch den ringförmigen Raum und gelangt in den Rohrzwischenraum des Wärmeaustauschers, wo es erwärmt wird, indem es das nach der dritten Sektion austretende und durch die Rohre des Wärmeaustauschers fliessende Reaktionsgas abkühlt. Das erwärmte Synthesegas gelangt durch die Perforation im rohrförmigen Element auf die Katalysatorschicht der ersten Sektion und durchströmt diese Schicht in radialter Richtung vom Zentrum zur Peripherie.

Beim Austritt aus der ersten Sektion wird das Reaktionsgas durch das Härtungsgas abgekühlt, vermischt sich mit diesem und gelangt auf die Katalysatorschicht der zweiten Sektion, wo es diese Schicht in radialer Richtung von der Peripherie zum Zentrum durchströmt. Beim Austritt aus der zweiten Sektion wird das Reaktionsgas durch das Härtungsgas abgekühlt, das aus dem zweiten Sammler zugeführt wird, vermischt sich mit diesem und gelangt auf die Katalysatorschicht der dritten Sektion. Die Bewegungsrichtung des Gases in ihr ist radial vom Zentrum zur Peripherie. Das aus der dritten Sektion austretende Reaktionsgas strömt in den Röhrenraum des Wärmeaustauschers ein.

Eine solche Konstruktion des Apparates verminderte die lineare Geschwindigkeit bei der Bewegung des Gases durch die körnige Katalysatorschicht und als Folge davon den hydraulischen Widerstand. Dadurch wurde es möglich, einen feinkörnigen Katalysator zu verwenden, was die Effektivität des Syntheseprozesses erhöhte. Jedoch hat die Verteilungskurve der linearen Geschwindigkeit des Gases in radialer Richtung bei der bekannten Konstruktion einen ungleichmässigen Charakter und verändert sich vom Maximalwert im Zentrum der Schicht bis zum Minimalwert gegen die Peripherie hin. Überdies ist die Verteilung des Temperaturfeldes in der Katalysatorschicht nicht optimal. Alles das mindert die effektive Ausnutzung des Katalysators herab, was zur Vergrösserung des Volumens desselben und des Volumens des Apparates im ganzen führt.

Die Verdünnung des Reaktionsgases mit Härtungsgas setzt den Ammoniakgehalt des Reaktionsgases am Austritt aus dem Apparat herab, was die Leistung des Apparates vermindert.

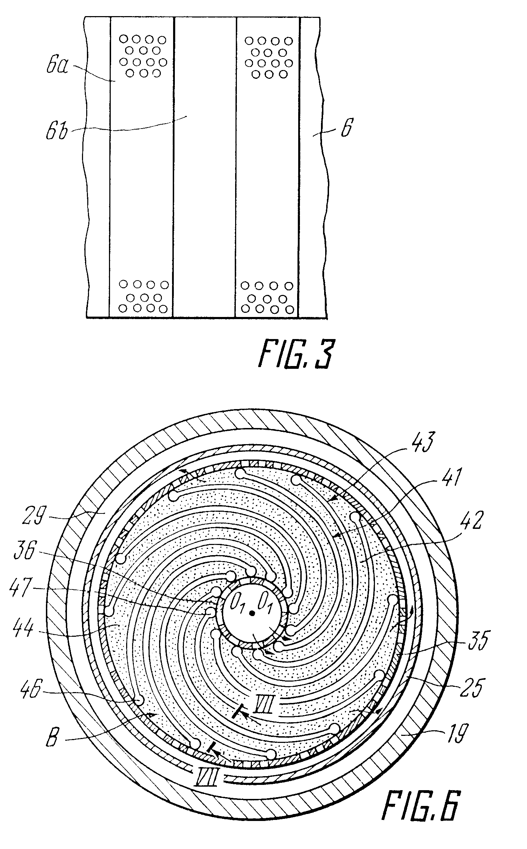

Ein Versuch, den Arbeitswirkungsgrad des Apparates zur Durchführung eines katalytischen Prozesses in einer körnigen Schicht, beispielsweise der Ammoniaksynthese, zu erhöhen, führte zur Schaffung eines Apparates (siehe den Prospekt der Firma Topsöe S-200 Ammonia Synthesis Process, Fig. 3).

Der Apparat stellt ein vertikales zylindrisches Gehäuse mit einem Stutzen für die Zuleitung des Synthesegas-Hauptstroms, Stutzen für die Beipassgas-Zuleitung und einem Stutzen für die Reaktionsgas-Ableitung dar. Innerhalb des Apparatgehäuses ist entlang seiner Längsachse ein topfförmiger Ringschuss angeordnet, der mit seinem Boden dem Stutzen für die Zuleitung des Synthesegas-Hauptstroms zugewandt ist und zur Verhinderung einer Überhitzung der Wände des Apparatgehäuses bestimmt ist. Zwischen der Innenfläche der Gehausewand und der Aussenfläche der Wand des topfförmigen Ringschusses ist ein erster ringförmiger Raum gebildet, der mit dem Stutzen für die Zuleitung des Synthesegas-Hauptstroms und mit dem Rohrzwischenraum eines ersten Röhrenwärmeaustauschers in Verbindung steht, welcher im genannten Schuss auf der Seite seines offenen Endes untergebracht ist. Die Zone des Röhrenraumes des Wärmeaustauschers ist von dem für die Aufnahme des Katalysators bestimmten Raumes mittels einer Trennwand getrennt, die an der Innenfläche des Ringschusses befestigt ist. Der Raum für die Aufnahme des Katalysators ist durch eine andere Trennwand in zwei Sektionen aufgeteilt. In jeder Sektion sind ein äusserer und ein innerer perforierter Ringschuss konzentrisch angeordnet. In der in der Bewegungsrichtung des Synthesegas-Hauptstromes ersten Sektion ist der ringförmige Raum zwischen den Ringschüssen in axialer Richtung durch Trennwände begrenzt, von denen eine an einem Ringschuss befestigt ist, dessen Wände ungelocht ausgeführt sind und den äusseren perforierten Ringschuss umfassen, indem sie einen Ringspalt bilden, während die andere Trennwand am äusseren perforierten Ringschuss befestigt ist. Entlang der Längsachse des Apparates ist ein zweiter Röhrenwärmeaustauscher angeordnet, der sich im Hohlraum des inneren perforierten Ringschusses befindet. Der Röhrenraum des zweiten Wärmeaustauschers steht mit dem Beipassgas-Zuleitungsstutzen mittels einer Rohrleitung in Verbindung, die durch eine Bohrung in der Tsennwand mit-einem Ringspalt geführt ist. Der Rohrzwischenraum des zweiten Röhrenwärmeaustauschers steht mit dem Hohlraum des inneren perforierten Ringschusses in Verbindung, welcher mit dem ringförmigen Raum zwischen der Innenwand des topfförmigen Ringschusses und der Aussenfläche des Ringschusses, dessen Wände ungelocht ausgeführt sind, verbunden ist. Der ringförmige Raum zwischen den äusseren und inneren perforierten Ringschüssen der ersten und der zweiten Sektion, der durch die Trennwände begrenzt ist, ist mit einem körnigen Katalysator ausgefüllt. Der Röhrenraum des ersten Wärmeaustauschers steht mit dem Hohlraum des inneren perforierten Ringschusses der zweiten Sektion und dem Reaktionsgas-Ableitstutzen in Verbindung. Bei der Arbeit des Apparates strömt das Synthesegas durch den ersten ringförmigen Hohlraum und gelangt in den Rohrzwischenraum des ersten Wärmeaustauschers, wo es durch die Wärme des abgehenden Reaktionsgases erwärmt wird. Das im ersten Wärmeaustauscher erwärmte Synthesegas vermischt sich mit dem Beipassgas und tritt über die Rohrleitung in die erste Sektion ein. In den Röhrenraum des zweiten Wärmeaustauschers strömt ebenfalls das Beipassgas, das erwärmt wird und sich mit dem Synthesegas-Hauptstrom vermischt. Der gemischte Gasstrom bewegt sich in radialer Richtung durch die Schicht des körnigen Katalysators von der Peripherie zum Zentrum und strömt in den Rohrzwischenraum des zweiten Wärmeaustauschers ein, indem es den Strom des in seinen Rohren fliessenden Beipassgases erwärmt. Das gekühlte Reaktionsgas verlässt die erste Sektion und gelangt in die Schicht des körnigen Katalysators der zweiten Sektion. Das Reaktionsgas bewegt sich durch die Katalysatorschicht in radialer Richtung von der Peripherie zum Zentrum und strömt in den Röhrenraum des ersten Wärmeaustauschers ein, von wo es aus dem Apparat herausgeführt wird. Die Verteilungskurve der linearen Geschwindigkeit des Gasstromes in radialer Richtung bleibt bei der obenangeführten Konstruktion ungleichmässig und verändert sich von dem Maximalwert im Zentrum der Schicht bis zum Minimalen Wert gegen ihre Peripherie hin, was den Ausnutzungskoeffizienten des Katalysatorvolumens verringert. Der Umstand, dass eine Wärmeabfuhr in der Schicht des körnigen Katalysators fehlt, führt zur Erhöhung der Gastemperatur am Austritt aus der Schicht, was die Ammoniakkonzentration im Reaktionsgas herabsetzt.

Offenbarung der Erfindung

Der Erfindung liegt die Aufgabe zugrunde, einen Apparat zur Durchführung eines katalytischen Prozesses in einer körnigen Schicht zu schaffen, dessen Konstruktive Ausführung unter Beibehaltung eines niedrigen hydraulischen Widerstandes der körnigen Katalysatorschicht und bei Verwendung eines feinkörnigen Katalysators eine vorgegebene Verteilungskurve der linearen Geschwindigkeit des Mediumstromes in der körnigen Schicht gewährleisten würde.

Die gestellte Aufgabe wird dadurch gelöst, dass im Apparat zur Durchführung eines katalytischen Prozesses in einer körnigen Schicht, enthaltend ein zylindrisches Gehäuse mit Stutzen für ein zuzuleitendes und ein abzuleitendes Medium, bei welchem Gehäuse entlang seiner Längsachse im Inneren desselben ein erster perforierter Ringschuss angeordnet ist, derart, dass zwischen seiner Aussenfläche und der Innenfläche des Gehäuses ein erster ringförmiger Raum gebildet ist, zwei Trennwände, die den Innenraum des Gehäuses in Zonen für den Ein- und den Austritt des Mediums aufteilen, wobei die eine Trennwand am Gehäuse befestigt ist, während die andere, die blind ist, an dem ersten perforierten Ringschuss befestigt ist, und wobei der zweite perforierte Ringschuss im ersten perforierten Ringschuss konzentrisch angeordnet ist, der mit der ersten Trennwand so verbunden ist, dass zwischen der Aussenfläche des zweiten perforierten Ringschusses und der Innenfläche des ersten perforierten Ringschusses ein zweiter ringförmiger Raum gebildet ist, welcher mit dem die Schicht formenden körnigen Material ausgefüllt und in axialer Richtung begrenzt ist.

Gemäss der Erfindung ist im Inneren des zweiten ringförmigen Raumes zwischen den Trennwänden ein Mittel zur Ausbildung in der körnigen Schicht mindestens eines Kanals untergebracht, in dessen beliebigem Querschnitt, der zur Bewegungsrrichtung des Mediumstromes senkrecht ist, der letztere eine vorgegebene Geschwindigkeit hat.

Eine derartige konstruktive Ausführung des Apparates zur Durchführung eines katalytischen Prozesses in einer körnigen Schicht gewährleistet eine vorgegebene lineare Geschwindigkeit des Mediumstromes. Die Gewährleistung einer gleichbleibenden Geschwindigkeit des Mediums in einem beliebigen Kanalquerschnitt, der zur Bewegungsrichtung des Mediumstromes senkrecht ist, trägt zu einer gleichmässigen Verteilung des Mediums in der körnigen Schicht bei, was die Effektivität der Ausnutzung der körnigen Schicht erhöht. Dies führt entweder zur Steigerung der Leistung des Apparates bei dessen unveränderter Aussenabmessung, oder zur Verringerung des Volumens der körnigen Schicht und folglich der Abmessungen des Apparates bei einer vorgegebenen Leistung. In dem erfindungsgemässen Apparat ist es möglich, in der körnigen Schicht einen katalytischen Prozess im nichtstationären Zustand, der sich durch ein vorgegebenes Gesetz der Änderung der linearen Geschwindigkeit des Mediumstromes kennzeichnet, durch Ausführung eines Kanals durchzuführen, dessen zur Bewegungsrichtung des Mediums senkrechte Querschnitte ein vorgegebenes Gesetz der Geschwindigkeitsänderung gewährleisten.

Eine solche Form der Seitenwände des Kanals bildet einen spiralförmigen Kanal, aus in welchem eine vorgegebene Durchflussgeschwindigkeit des Mediumstroms über die ganze Dicke der körnigen Schicht sichergestellt wird. Die spiralförmige Gestalt des Kanals trägt zu einer effektiven Ausnutzung des ganzen Volumens des körnigen Materials bei. Die Ausbildung von mehreren spiralförmigen Kanälen innerhalb des zweiten ringförmigen Raumes vergrössert den Durchgangsquerschnitt des Apparates bei dessen vorgegebener Aussenabmessung dank dem summarischen Durchgangsquerschnitt der Kanäle. Die Ausführung eines jeden spiralförmigen Kanals mit einem konstanten Querschnitt in der Bewegunsrichtung des Stromes gewährleistet praktisch eine gleichmässige Geschwindigkeit des Mediums in der körnigen Schicht.

Diese Konstruktion des Apparates gewährleistet eine gleichmässage Verteilung des Mediums in der körnigen Schicht dank den gleichen Bedingungen seines Eintritts in die Kanäle und dank der Vermeidung der Überströmung des Mediumstromes aus einem Kanal in den anderen. Es ist möglich, dass jede der Kanalwände aus einem flachen Blechmaterial gebildet ist. Eine solche Konstruktion des Apparates ist bei dessen Einsatz für einen adiabatischen katalytischen Prozess, beispielsweise für die Oxydation von Schwefeldioxid in der Schwefelsäureproduktion (zweite Stufe), für den Prozess der Adsorption z.B. von Stickstoff aus der Luft, den Prozess der Filtration z.B. von Wasser u.a.m. zweckmässig.

Es ist zweckmässig, dass jede von den Kanalwänden eine Wärmeaustauschfläche darstellt, die von rohrförmigen Elementen gebildet ist, welche über ihre Eingänge mit einem mit einer Wärmeträgerquelle verbundenen Eintrittssammler verbunden sind, während sie über ihre Ausgänge mit einem Austrittssammler für den Wärmeträger verbunden sind, wobei der Eintrittssammler und der Austrittssammler für den Wärmeträger mit dem Gehäuse verbunden sind.

Eine derartige konstruktive Ausführung der Kanalwände gewährleistet die Aufrechterhaltung einer optimalen Wärmeführung des katalytischen Prozesses, der entweder von einer Wärmeabfuhr bei einer exothermen Reaktion oder von einer Wärmezufuhr bei einer endothermen Reaktion begleitet wird. Bei der horizontalen Anordnung der rohrförmigen Elemente, welche die Kanalwand bilden, kann man eine gegenläufige Bewegung oder eine Gleichstrombewegung der Ströme des zu behandelnden Mediums und des Wärmeträgers organisieren, was eine Optimierung der Temperaturführung des vorgegebenen Prozesses gewährleisten wird. Bei der Durchführung eines katalytischen Prozesses bei konstanter Temperatur sind die rohrförmigen Elemente der Kanalwand vertikal angeordnet. Die Aufrechterhaltung einer konstanten Temperatur des Prozesses wird durch Verdampfung des Wärmeträgers in den rohrförmigen Elementen sichergestellt.

Diese konstruktive Ausführung der Wände der Kanäle ist bevorzugt bei einem beträchtlichen Druckgefälle zwischen dem sich in den rohrförmigen Elementen bewegenden Wärmeträger und dem in den Kanälen durch die körnige Schicht strömenden Medium anzuwenden.

Bei einem geringen Druckgefälle zwischen dem Wärmeträger und dem durch die körnige Schicht strömenden Medium empfiehlt es sich, dass jede der Wände eine Wärmeaustauschfläche darstellt, die einen Kastenquerschnitt in der durch den Krümmungshalbmesser der Wand parallel zur Längsachse des Apparates verlaufenden Ebene aufweist und mit dem Eintritts- und dem Austrittssammler in Verbindung steht, von denen jeder an einer der genannten zwei Trennwände befestigt und parallel zur Längsachse des Apparates angeordnet ist.

Eine solche konstruktive Ausführung der Wände der Kanäle gewährleistet bei der Einfachheit ihrer Herstellung eine Verminderung des hydraulischen Widerstandes gegen den Wärmeträgerstrom bei einer hohen Wärmeübergangszahl zwischen dem Wärmeträger und dem durch die körnige Schicht strömenden Medium.

Es ist wünschenswert, dass in jedem Kanal mindestens zwei Abstandsstücke untergebracht sind, von denen jedes die Konstanz des Durchgangsquerschnitts des Kanals sicherstellt und längs dem Krümmungshalbmesser der Wand, an welcher es befestigt ist, angeordnet ist. Die Abstandsstücke sind bei der Aufstellung der Wände im Apparat und Gewährleistung eines vorgegebenen Abstandes zwischen ihnen vor der Schüttung des körnigen Materials erforderlich.

Es ist wünschenswert, Abstandsstücke vorzusehen, die zwischen den grösseren Seiten des Kastenquerschnittsuntergebracht und zumindest an einer der grösseren Seiten des Kastenquerschnitts befestigt sind. Die Notwendigkeit, über diese Elemente zu verfügen, ist durch die Beibehaltung der Steifigkeit der Wand bedingt, auf welche eine Druckkraft seitens der Schicht des körnigen Materials wirkt. Die im Hohlraum der Wand vorhandenen Abstandsstücke verwirbeln den durch diesen Hohlraum fliessenden Wärmeträgerstrom, was den Wärmeübergang von dem Wärmeträger zu dem durch die körnige Schicht strömenden Medium verbessert.

Es ist zweckmässig, dass die Oberfläche des ersten perforierten Ringschusses in der Abwicklung ein Rechteck mit einander abwechselnden perforierten und ungelochten Streifen darstellt, die längs der Erzeugenden des Ringschusses angeordnet sind, wobei die Zone des Ringschusses mit dem ungelochten Streifen an die Kanalwand angrenzt, während sie mit der anderen Seite in Richtung der Vergrösserung des Krümmungshalbmessers der Wand weist, und wobei die Anzahl der ungelochten Streifen gleich der Anzahl der Wände der Kanäle sein soll.

Diese konstruktive Ausführung des ersten perforierten Ringschusses erhöht den Grad der Ausnutzung des körnigen Materials dank der Vergrösserung der Verweilzeit des Mediums in der körnigen Schicht durch Verlängerung des Weges, den das Medium zwischen dem zweiten perforierten Ringschuss und dem ersten perforierten Ringschuss zurücklegt.

Es empfiehlt sich, in jedem Kanal einen spiralförmigen Kamm unterzubringen, der über die Länge des Kanals an einer der Trennwänden starr befestigt ist und mit den Kanalwänden eine Labyrinthdichtung bildet.

Eine derartige konstruktive Ausführung des Apparates gewährleistet die effektivste Ausnutzung der körnigen Schicht auf der gesamten Kanallänge dadurch, dass die Überströmung des zugeleiteten Mediums in radialer Richtung zwischen der Kante jeder der Wände und den Trennwänden aus der Eintrittszone in die Austrittszone des Mediums ausgeschlossen wird.

Der erfindungsgemäss ausgeführte Apparat zur Durchführung eines katalytischen Prozesses, beispielsweise der Ammoniaksynthese, besitzt bei einer vorgegebenen Leistung eine etwa um das Zweifache verringerte Aussenabmessung oder gewährleistet unter Beibehaltung der früheren Aussenabmessung eine Leistungssteigerung bezogen auf Ammoniak ungefähr um das Zweifache.

Der gemäss der Erfindung ausgeführte Apparat zur Durchführung eines katalytischen Prozesses gestattet es, den Prozess der Dampf- oder der Dampf-Luft-Konvertierung von Kohlenwasserstoffen unter Verwendung eines feinkörnigen Katalysators mit 2 bis 5 mm Korngrösse bei einer Verringerung des Kapitalaufwandes etwa um das Fünffache und einer Reduzierung von Schadstoffemissionen in die Umgebung ungefähr um das 10- bis 20fache durchzuführen.

Der erfindungsgemässe Apparat zur Durchführung eines katalytischen Prozesses bietet die Möglichkeit, den Prozess der Oxydation von Schwefedioxid in der Schwefelsäureproduktion in Gegenwart eines feinkörnigen Katalysators mit einer Korngrösse von 1,0 bis 10 mm bei der Gewährleistung eines Gesamtoxydationsgrades des Gases von 99,9% durchzuführen.

Kurze Beschreibung der Zeichungen

Andere Ziele und Vorteile der Erfindung sind aus ihren nachfolgenden konkreten Ausführungsbeispielen und und den beigefügten Zeichnungen erkennbar, in denen es zeigt:

Fig. 1 in schematischer Darstellung den erfindungsgemässen Apparat zur Durchführung eines katalytischen Prozesses in einer körnigen Schicht, beispielsweise zur Durchführung des zweiten Stadiums der Oxydation von Schwefeldioxid in der Schwefelsäureproduktion, im Längsschnitt;

Fig. 2 einen Schnitt nach Linie II - II der Fig. 1;

Fig. 3 eine Ansicht in Pfeilrichtung A von Fig. 2;

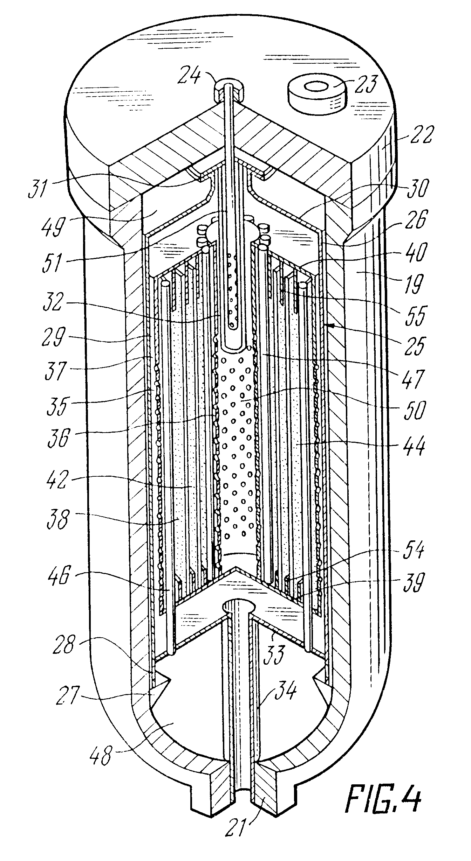

Fig. 4 in schematischer Darstellung den erfindungsgemässen Apparat zur Durchführung eines katalytischen Prozesses in einer körnigen Schicht, beispielsweise zur Durchführung der Ammoniaksynthese, in der Isometrie mit teilweisem Ausbruch;

Fig. 5 den erfindungsgemässen Apparat zur Durchführung der Ammoniaksynthese, im Längsschnitt;

Fig. 6 einen Schnitt nach Linie VI - VI der Fig. 5;

Fig. 7 einen Schnitt nach Linie VII-VII der Fig. 6 im vergrösserten Massstab;

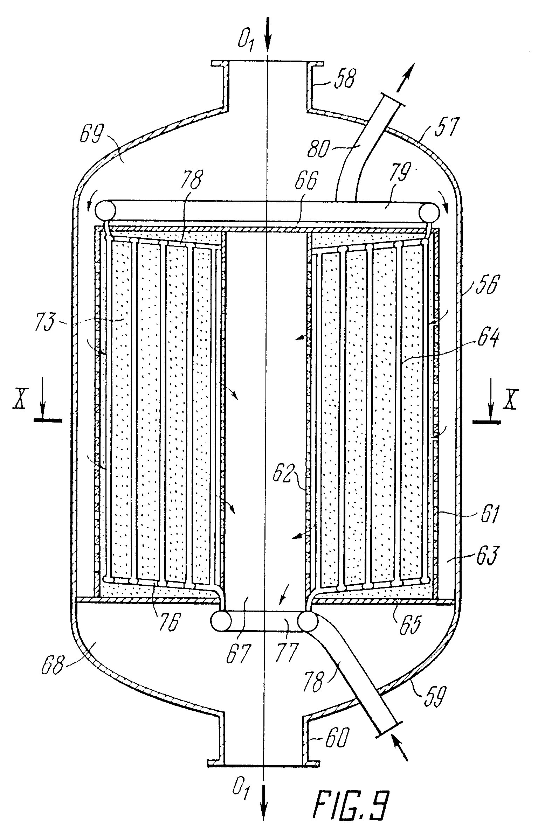

Fig. 8 Ansicht in Pfeilrichtung B in der Abwicklung, im verkleinerten Massstab;

Fig. 9 in schematischer Darstellung den erfindungsgemässen Apparat zur Durchführung eines katalytischen Prozesses in einer körnigen Schicht, beispielsweise zur Durchführung der Dampfkonvertierung von Kohlenoxid, im Längsschnitt;

Fig. 10 einen Schnitt nach Linie X-X der Fig. 9;

Fig. 11 Ansicht in Pfeilrichtung C von Fig. 10 in der Abwicklung;

Fig. 12 einen Schnitt nach Linie XII-XII der Fig. 11, im vergrösserten Massstab.

Beste Ausführungsformen der Erfindung

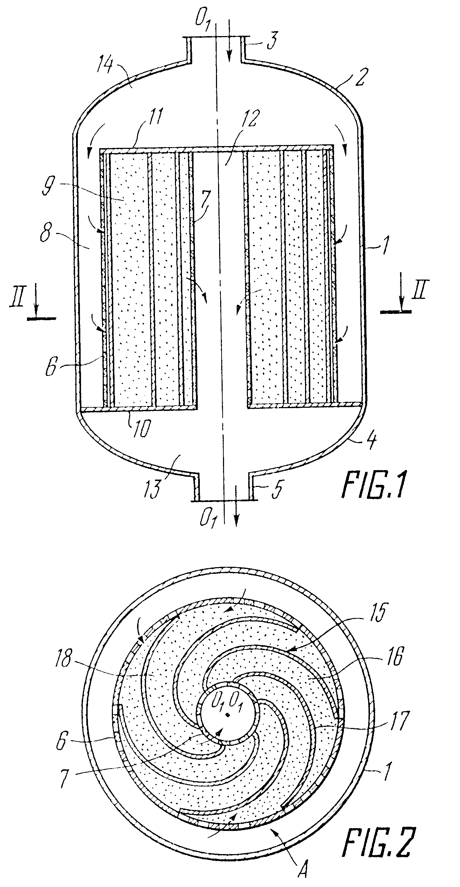

Der erfindungsgemässe Apparat zur Durchführung eines katalytischen Prozesses in einer körnigen Schicht, beispielsweise des zweiten Stadiums der Oxydation von Schwefeldioxid in der Schwefelsäureproduktion, enthält ein vertikales zylindrisches Gehäuse 1 (Fig. 1) mit einem elliptischen Boden 2, an dem ein Stutzen 3 für ein zuzuleitendes Medium, beispielsweise Schwefelgas, befestigt ist, und mit einem elliptischen Boden 4, an dem ein Stutzen 5 für ein abzuleitendes Medium, beispielsweise Reaktionsgas, befestigt ist. Innerhalb des Gehäuses 1 sind entlang seiner Längsachse ein erster perforierter Ringschuss 6 und ein zweiter perforierter Ringschuss 7 konzentrisch angeordnet. Zwischen der inneren Seitenfläche des Gehäuses 1 und der äusseren Seitenfläche des perforierten Ringschusses 6 ist ein erster ringförmiger Raum 8 gebildet.

Zwischen der Innenfläche des ersten perforierten Ringschusses 6 und der Aussenfläche des zweiten perforierten Ringschusses 7 ist ein zweiter ringförmiger Raum 9 gebildet, der zum Ausfüllen mit einem körnigen Material, beispielsweise mit einem Katalysator der Oxydation von Schwefeldioxid, bestimmt ist. Die Korngrösse des Katalysators beträgt 1,0 bis 10 mm. In axialer Richtung ist der erste ringförmige Raum 8 und der zweite ringförmige Raum 9 auf der Seite des Stutzens 5 durch eine Trennwand 10 begrenzt, und auf der Seite des Stutzens 3 ist der zweite ringförmige Raum 9 durch eine Trennwand 11 begrenzt. Im Inneren des zweiten perforierten Ringschusses 7 ist ein zylindrischer Hohlraum 12 gebildet, der mit einem Raum 13 in Verbindung steht, welcher zwischen der Trennwand 10 und dem Boden 4 gebildet ist, während der ringförmige Raum 8 mit einem Raum 14 in Verbindung steht, welcher zwischen der Trennwand 11 und dem Boden 2 gebildet ist.

In dem zweiten ringförmigen Raum 9 ist ein Mittel 15 (Fig. 2) zur Ausbildung im zweiten ringförmigen Raum 9 von Kanälen 16 untergebracht, wobei in jedem beliebigen Querschnitt eines jeden von ihnen, der zur Bewegungsrichtung des Mediumstroms senkrecht ist, der letztere eine vorgegebene Geschwindigkeit besitzt. Die Wände 17 eines jeden Kanals 16 weisen in der zur Längsachse $O_1$-$O_1$ des Apparates senkrechten Ebene die Form einer Flachspirale auf, die um einen auf der Achse $O_1$-$O_1$ liegenden Punkt verdreht ist, und sind durch die jeweiligen Kreise des ersten und des zweiten perforierten Ringschusses 6 und 7 begrenzt. Auf diese Weise sind im zweiten ringförmigen Raum 9 die spiralförmigen Kanäle 16 ausgebildet, die mit dem Katalysator ausgefüllt sind. Die Reaktion der Oxydation von Schwefeldioxid zu Schwefeltrioxid im zweiten Oxydationsstadium verläuft unter einer geringen Wärmeentwicklung, weil im Schwefelgas eine geringe Menge von Schwefeldioxid enthalten ist. Der Prozess läuft ohne Abführung der Reaktionswärme aus der Reaktionszone ab, weshalb jede von den Wänden 17 aus einem ungelochten flachen Blechmaterial ausgeführt ist. Für eine effektivere Ausnutzung des Katalysators 18, der an die Innenfläche des perforierten Ringschusses 6 angrenzt, stellt der letztere in der Abwicklung ein Rechteck mit einander abwechselnden perforierten Streifen 6a (Fig. 3) und ungelochten Streifen 6h dar, die längs der Erzeugenden des Ringschusses 6 angeordnet sind. Die Zone des Ringschusses mit dem ungelochten Streifen 6b grenzt an die Wand 17 des kanals 16 solcherweise an, dass sie eine Fortsetzung dieser Wand in der Bewegungsrichtung des Mediumstromes ist.

Bei der Durchführung des Prozesses des zweiten Stadiums der Oxydation von Schwefeldioxid in dem erfindungsgemässen Apparat tritt das erwärmte Schwefelgas über den Stutzen 3 in den oberen Teil des Apparates in den Raum 14 ein, von wo es in den ringförmigen Raum 8 strömt und nach Passieren der Löcher des perforierten Ringsschusses 6 in die Schicht des in den spiralförmigen Kanälen 16 befindlichen Katalysators 18 gelangt. Auf dem Katalysator 18 kommt die Oxydation von Schwefeldioxid zustande. Der Schwefelgasstrom bewegt sich in den Kanälen durch den Katalysator 18 praktisch mit einer gleichbleibenden Geschwindigkeit, was ihn effektiver auszunutzen gestattet.

Das infolge der Reaktion der Oxydation von Schwefeldioxid erhaltene Reaktionsgas tritt aus den Kanälen 16 aus, passiert den perforierten Ringschuss 7 und gelangt in den zylindrischen Hohlraum 12 und in dem Raum 13 und wird über den Stutzen 5 aus dem Apparat herausgeführt. Eine solche Konstruktion des Apparates gewährleistet einen Oxydationsgrad des Schwefelgases von 98% bei einem Gesamtoxydationsgrad von Schwefeldioxid von 99,90% bis 99,95%, und die Verwendung eines Katalysators mit einer Grösse der Granalien von 2,4 mm erzeugt einen hydraulischen Widerstand von etwa 40 mm WS bei einer Verringerung der Aussenabmessung des Apparates gegenüber den existierenden Apparaten ungefähr um das Zweifache.

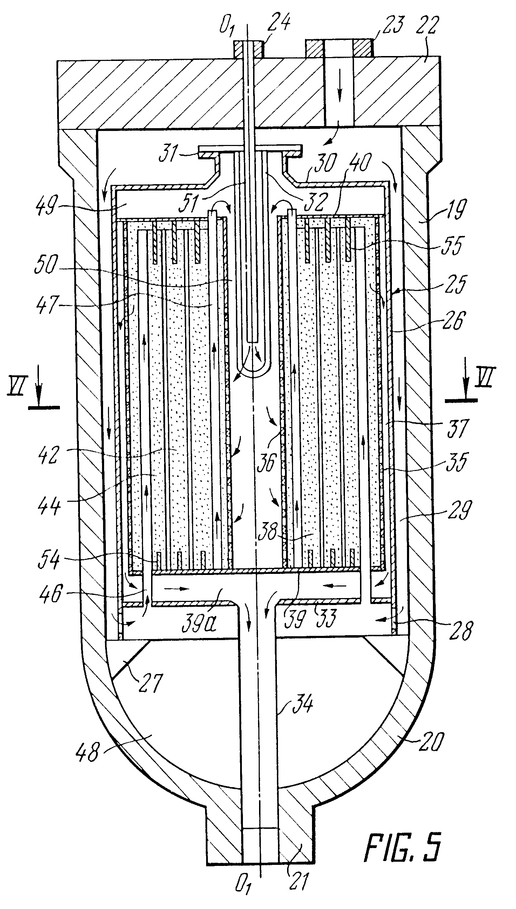

Der gemäss der Erfindung ausgeführte Apparat zur Durchführung eines katalytischen Prozesses in einer körnigen Schicht, beispielsweise der Ammoniaksynthese, enthält ein vertikales zylindrisches Hochdruck-Traggehäuse 19 (Fig. 5) mit einem sphärischen Boden 20, an dem ein Stutzen 21 für ein abzuleitendes Medium, beispielsweise das Reaktionsgas, befestigt ist, und einem flachen Deckel 22, an dem Stutzen für ein zuzuleitendes Medium, beispielsweise ein Stutzen 23 für die Zuleitung des Synthesegas-Hauptstromes und ein Stutzen 24 für die Zuleitung des Beipass-Synthesegases, befestigt sind.

Innerhalb des Traggehäuses 19 ist entlang seiner Längsachse ein Gehäuse 25 angeordnet, das die Zone des Verlaufs der Reaktion der Ammoniaksynthese begrenzt und Korb genannt wird. Das Gehäuse 25 stellt eine zylindrische Hülle 26 dar, die sich auf einem am Boden 20 des Traggehäuses 19 befindlichen ringförmigen Vorsprung 27 abstützt. An der Seitenfläche der Hülle 26 sind in der Zone ihrer Abstützung auf dem ringförmigen Vorsprung 27 gleichmässig verteilte durchgehende Radialöffnungen 28 ausgeführt. Zwischen der inneren Seitenfläche des Traggehäuses 19 und der äusseren Seitenfläche der Hülle 26 ist ein ringförmiger Kanal 29 gebildet. Die Hülle 26 ist auf der Seite des Stutzens 23 für die Zuleitung des Synthesegas-Hauptstroms durch einen Deckel 30 mit einem Flansch 31 verschlossen, an welchem ein elektrischer Vorwärmer 32 befestigt ist, der die erforderliche Temperatur für den Beginn der katalytischen Reaktion der Ammoniaksynthese besorgt.

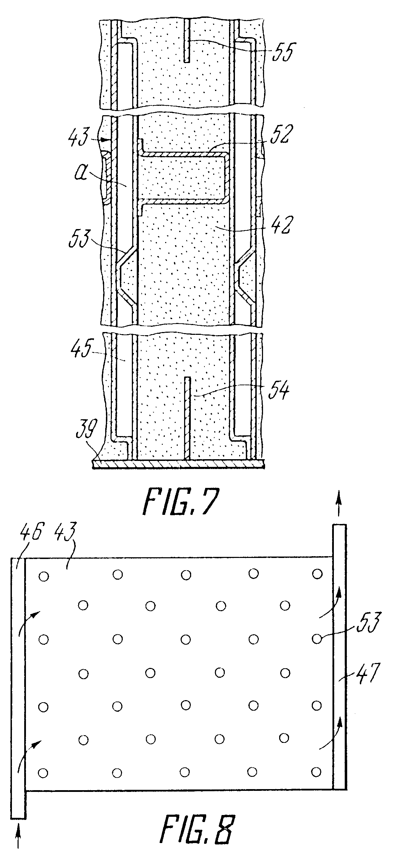

Die Hülle 26 weist auf der Seite des Stutzens 21 für die Reaktionsgasableitung einen Boden 33 auf, der über den Öffnungen 28 liegt und an der Wand der genannten Hülle befestigt ist. Am Boden 33 ist ein Stutzen 34 befestigt, der mit dem Kanal des Stutzens 21 in Verbindung steht. Innerhalb des Gehäuses 25 sind entlang seiner Längsachse ein erster perforierter Ringschuss 35 und ein zweiter perforierter Ringschuss 36 konzentrisch angeordnet. Zwischen der äusseren Seitenfläche des ersten perforierten Ringschusses 35 und der inneren Seitenfläche der zylindrischen Hülle 26 ist ein erster ringförmiger Raum 37 gebildet. Zwischen der äusseren Seitenfläche des zweiten perforierten Ringschusses 36 und der inneren Seitenfläche des ersten perforierten Ringschusses 35 ist ein zweiter ringförmiger Raum 38 gebildet, der zum Ausfüllen mit dem körnigen Material, beispielsweise mit einem Katalysator mit 1 bis 5 mm Korngrösse bestimmt und in axialer Richtung durch zwei Trennwände 39, 40 begrenzt ist. In dem zweiten ringförmigen Raum ist ein Mittel 41 (Fig. 6) zur Ausbildung im zweiten ringförmigen Raum 38 von Kanälen 42 untergebracht, wobei in einem beliebigen Querschnitt eines jeden von ihnen, der zur Bewegungsrichtung des Mediumstroms senkrecht ist, der letztere eine vorgegebene Geschwindigkeit hat. Die Wände 43 eines jeden Kanals 42 weisen in der Ebene, die zur Längsachse $O_1$-$O_1$ des Apparates senkrecht ist, die Form einer Flachspirale auf, die um einen auf der Achse $O_1$-$O_1$ liegenden Punkt verdreht ist, und sind durch die jeweiligen Kreise des ersten und des zweiten perforierten Ringschusses 35 und 36 begrenzt. Auf diese Weise sind im zweiten ringförmigen Raum 38 beispielsweise zwölf spiralförmige Kanäle ausgebildet, die mit einem körnigen Material, beispielsweise mit einem Katalysator 44 ausgefüllt sind. Die Reaktion der Ammoniaksynthese verläuft unter Entwicklung einer Wärme, die zur Aufrechterhaltung einer optimalen Temperatur in der Reaktionszone, welche eine maximale Konzentration von Ammoniak in den Reaktionsgasen sicherstellt, abgeführt werden muss.Hierzu ist jede der Wände 43 hohl ausgeführt und stellt eine Wärmeaustauschfläche dar, die einen Kastenquerschnitt "a" (Fig. 7) in einer Ebene hat, die durch den Krümmungshalbmesser der Wand 43 parallel zur Längsachse $O_1$-$O_1$ des Apparates verläuft. Der Hohlraum 45 der Wand 43 steht mit einem Eintrittssammler 46 (Fig. 5) und einem Austrittssammler 47 des Synthesegases in Verbindung. Jeder Eintrittssammler 46 ist an der Trennwand 39 und dem Boden 33 der Hülle 27 befestigt und steht mit einem Raum 48 des Apparates in Verbindung, der durch die Innenfläche des sphärischen Bodens 20, den Boden 33 und die Aussenfläche des Stutzens 34 begrenzt ist. Jeder Austrittssammler 47 ist an der Trennwand 40 befestigt und steht mit einem Raum 49 in Verbindung, der durch die Trennwand 40 und den Deckel 30 begrenzt ist. Der Raum 49 steht mit dem Hohlraum 50 des zweiten perforierten Ringschusses 36 in Verbindung. Im Hohlraum 50 befinden sich der elektrische Vorwärmer 32 und ein Stutzen 51, der mit dem Stutzen 24 für die Zuleitung des Beipass-Synthesegases in Verbindung steht. Zur Gewährleistung einer gleichbleibenden Geschwindigkeit des Durchflusses des Gasstromes durch einen jeden spiralförmigen Kanal 42 sind in dem letzteren beispielsweise zwei Abstandstücke 52 (Fig. 7) untergebracht die klammerförmig ausgebildet sind und von denen jedes an einer der den spiralförmigen Kanal 42 begrenzenden Wände 43 befestigt ist. Zur Gewährleistung der Steifigkeit der Wände 43, auf welche eine Druckkraft seitens der Schicht des körnigen Materials wirkt, sind zwischen den grösseren Seiten des Kastenquerschnitts "a" Distanzstücke 53 vorgesehen, die beispielsweise durch Gesenkschmieden gebildet und schachbrettartig angeordnet sind. Die im Hohlraum 45 der Wand 43 vorhandenen Distanzstücke 53 verwirbeln den durch diesen Hohlraum fliessenden Wärmeträgerstrom, beispielsweise das kalte Synthesegas. Dies verbessert den Wärmeübergang von dem durch die körnige Schicht strömenden Gas zu dem durch den Hohlraum 45 jeder Wand 43 fliessenden Strom des kalten Synthesegases. Um zu vermeiden, dass der Synthesegasstrom aus dem Hohlraum 50 in den Hohlraum 37 vorbei an der Schicht des Katalysators 44 überströmt, ist längs der Oberfläche der Trennwand 39 in jedem Kanal 42 ein spiralförmiger Kamm 54 untergebracht. Der letztere ist über die Länge des Kanals 42 an der Trennwand 39 starr befestigt und bildet mit den Wänden 43 des Kanals 42 eine Labyrinthdichtung. Im Prozess der Arbeit des Apparates findet eine Schwindung des körnigen Materials statt. Um zu verhindern, dass das Synthesegas aus dem Hohlraum 50 in den Hohlraum 37 vorbei an der Schicht des Katalysators 44 überströmt, ist längs der Oberfläche der Trennwand 40 in jedem Kanal 42 ein spiralförmiger Kamm 55 untergebracht. Der letztere ist über die Länge des Kanals 42 an der Trennwand 40 starr befestigt und bildet mit den Wänden 43 des Kanals 42 eine Labyrinthdichtung.

Bei der Durchführung des Prozesses der Ammoniaksynthese in dem erfindungsgemässen Apparat gelangt das Synthesegas über den Stutzen 5 in den oberen Teil des Apparates in den Raum zwischen dem flachen Deckel 22 des Gehäuses 19 und dem Deckel 30 des Gehäuses 25, von wo es in den ringförmigen Kanal 29 überströmt und dann durch die Öffnungen 28 in den durch den Boden 20 des Gehäuses 19 und den Boden 33 des Gehäuses 25 begrenzten Raum 48 eintritt. Des weiteren füllt das Synthesegas über die zwölf Eintrittssammler 46 die Innenhohlräume 45 (Fig. 7) der Wärmeaustauschflächen der Wände 43 aus, wird erwärmt und strömt über die Austrittssammler 47 in die Hohlräume 49 zwischen der Trennwand 40 und dem Deckel 30 der Hülle 26, von wo es in den Hohlraum 50 überströmt, in welchem es durch die von dem elektrischen Vorwärmer 32 herrührende Wärme erwärmt wird. Das erwärmte Synthesegas gelangt durch die Löcher des perforierten Ringschusses 36 in die Schicht des körnigen Katalysators 44 und erwärmt sie bis auf die Temperatur des Beginns der Reaktion der Ammoniaksynthese, worauf man den elektrischen Vorwärmer abschaltet. Die Reaktion der Ammoniaksynthese wird von der Entwicklung einer Wärme begleitet, die durch Erwärmung des in den Hohlräumen 45 der Wärmeaustauschflächen der Wände 43 fliessenden Synthesegases abgeführt wird. Zur Aufrechterhaltung einer optimalen Temperatur in der Reaktionszone, und zwar in der körnigen Katalysatorschicht, wird das Beipassgas über den Stutzen 24 und 51 dem Hohlraum 50 zugeleitet, wo die Vermischung des Beipassgases und des Synthesegases vor sich geht. Aus dem Hohlraum 50 gelangt das Synthesegas durch den perforierten Ringschuss 36 in die Kanäle 42, welche mit dem körnigen Katalysator 44 ausgefüllt sind. Der Synthesegasstrom bewegt sich in den Kanälen 42 durch den Katalysator 44 praktisch mit einer gleichbleibenden Geschwindigkeit, was seine effektivere Ausnutzung gestattet. Das im Ergebnis der Reaktion der Ammoniaksynthese erhaltene Reaktionsgas verlässt die Kanäle 42, tritt durch den perforierten Ringschuss 35 und gelangt in den ringförmigen Raum 37, strömt dann in den Raum 39a, der durch die Trennwand 39, den Boden 33 und die Innenfläche des Ringschusses 26 begrenzt ist, von wo es über den Stutzen 34 und den Stutzen 21 aus dem Apparat abgeleitet wird.

Die vorstehend beschriebene Konstruktion des Apparates gewährleistet eine Leistungssteigerung um das Zweifache bei dessen unveränderter Aussenabmessung und bei einer Senkung der Metallintensität etwa um 25%.

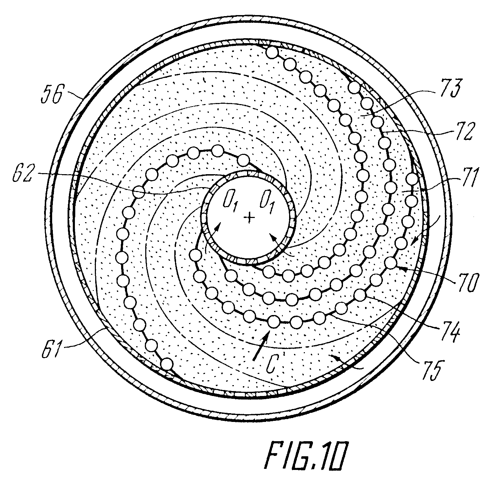

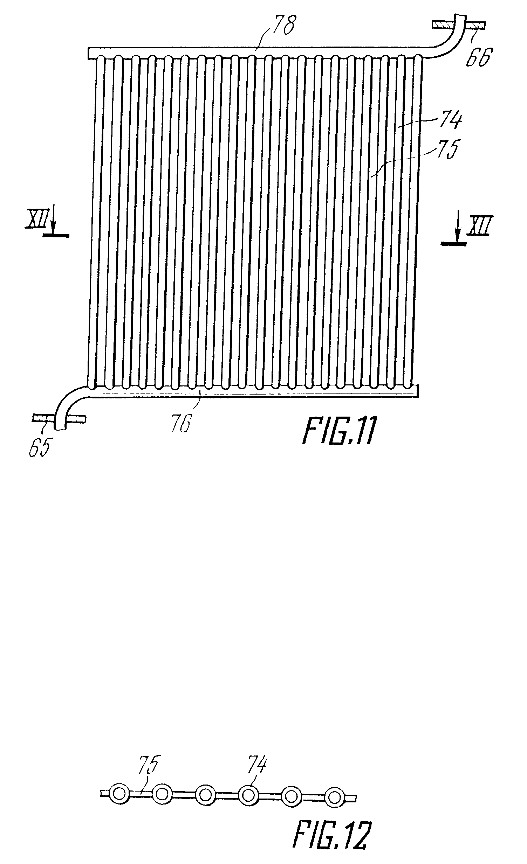

Der erfindungsgemässe Apparat zur Durchführung eines katalytischen Prozesses in einer körnigen Schicht, beispielsweise zur Durchführung der Dampfkonvertierung von Kohlenoxid enthält ein vertikales zylindrisches Gehäuse 56 (Fig. 9) mit einem elliptischen Boden 57, an dem ein Stutzen 58 für ein zuzuleitendes Medium, beispielsweise das konvertierte Gas, das ein kohlenoxidhaltiges Dampf-Gas-Gemisch darstellt, befestigt ist, sowie mit einem elliptischen Boden 59, an dem ein Stutzen 60 für ein abzuleitendes Medium, beispielsweise das konvertierte Reaktionsgas, befestigt ist. Innerhalb des Gehäuses 56 sind entlang seiner Längsachse ein erster perforierter Ringschuss 61 und ein zweiter perforierter Ringschuss 62 konzentrisch angeordnet. Zwischen der inneren Seitenfläche des Gehäuses 56 und der äusseren Seitenfläche des perforierten Ringschusses 61 ist ein erster ringförmiger Raum 63 gebildet. Zwischen der Innenfläche des ersten perforierten Ringschusses 61 und der Aussenfläche des zweiten perforierten Ringschusses 62 ist ein zweiter ringförmiger Raum 64 gebildet, der zum Ausfüllen mit einem körnigen Material, beispielsweise mit dem Katalysator der Dampfkonvertierung von Kohlenoxid, bestimmt ist. Die Korngrösse des Katalysators beträgt 1 bis 5 mm. In axialer Richtung ist der erste ringförmige Raum 63 und der zweite ringförmige Raum 64 auf der Seite des Stutzens 60 durch eine Trennwand 65 begrenzt, während auf der Seite des Stutzens 58 der zweite ringförmige Raum 64 durch eine Trennwand 66 begrenzt ist. Im Inneren des zweiten perforierten Ringschusses 62 ist ein zylindrischer Hohlraum 67 gebildet, der mit einem zwischen der Trennwand 65 und dem Boden 59 gebildeten Raum 68 in Verbindung steht, während der ringförmige Raum 63 mit einem zwischen der Trennwand 66 und dem Boden 57 gebildeten Raum 69 in Verbindung steht. In dem zweiten ringförmigen Raum 64 ist ein Mittel 70 (Fig. 10) zur Ausbildung im genannten Raum 64 von Kanälen 71 untergebracht, wobei in einem beliebigen Querschnitt eines jeden von ihnen, der zur Bewegungsrichtung des Mediumstroms senkrecht ist, der letztere eine vorgegebene Geschwindigkeit hat. Die Wände 72 eines jeden Kanals 71 weisen in der zur Längsachse $O_1$-$O_1$ des Apparates senkrechten Ebene die Form einer Flachspirale auf, die um einen auf der Achse $O_1$-$O_1$ liegenden Punkt verdreht ist, und sind durch die jeweiligen Kreise des ersten und des zweiten perforierten Ringschusses 61 und 62 begrenzt. Auf diese Weise sind im zweiten ringförmigen Raum 64 (Fig. 9) sind die spiralförmigen Kanäle 71 (Fig. 10) ausgebildet, die mit einem körnigen Material, beispielsweise mit dem Katalysator 73, ausgefüllt sind. Der Prozess der katalytischen Dampfkonvertierung von Kohlenoxid läuft auf dem Katalysator unter Wärmeentwicklung ab. Der für die Konvertierung verwendete Katalysator ist sehr empfindlich gegen Temperaturüberhitzungen, weshalb es am optimalsten ist, den Prozess isotherm, d.h. mit der Wärmeabnahme dei konstanter Temperatur, durchzuführen. Dazu ist jede der Wände 72 aus vertikalen Rohren 74 ausgeführt, die mit vertikalen Streifen (Flossen) 75 abwechseln, die mit den Rohren 74 über die gesamte Länge z.B. durch Schweissen (Fig. 11) starr verbunden sind. Die Eingänge der vertikalen Rohre 74 einer jeden Wand 72 stehen auf der Seite der Trennwand 65 mit einem Sammler 76 in Verbindung. Alle Sammler 76 sind an der Trennwand 65 befestigt und stehen mit einem gemeinsamen Sammler 77 in Verbindung, der mit einem Stutzen 78 für die Zuleitung eines Wärmeträgers, z.B. Wasser, verbunden ist. Die Ausgänge der vertikalen Rohre 74 jeder Wand 72 stehen auf der Seite der Trennwand 66 mit einem Sammler 78 in Verbindung. Alle Sammler 78 sind an der Trennwand 66 befestigt und mit einem gemeinsamen Sammler 79 verbunden, der mit einem Stutzen 80 für den Austritt des Wärmeträgers, beispielsweise eines Dampf-Flüssigkeit-Gemisches, aus dem Apparat in Verbindung steht.

Bei der Durchführung des Prozesses der katalytischen Dampfkonvertierung von Kohlenoxid in dem gemäss der Erfindung ausgeführten Apparat tritt das konvertierte Gas über den Stutzen 58 in den oberen Teil des Apparates in den Raum 69 zwischen dem Boden 57 und der Trennwand 66, von wo es in den ersten ringförmigen Raum 63 strömt und dann durch die Löcher des perforierten Ringschusses 61 in die Schicht des körnigen Katalysators 73, der sich in den spiralförmigen Kanälen 71 befindet, gelangt. Auf dem Katalysator 73 findet die Dampfkonvertierung von Kohlenoxid statt. Die entwickelte Reaktionswärme wird über die Wände der Rohre 74 und die Streifen 75 zum Wasser übertragen, das sich in den Rohren 74 von unten nach oben bewegt. Der Strom des konvertierten Gases bewegt sich in den Kanälen 71 durch den Katalysator 73 praktisch mit einer gleichbleibenden Geschwindigkeit, was ihn effektiver auszunutzen erlaubt.

Das im Ergebnis der Reaktion der Dampfkonvertierung von Kohlenoxid erhaltene Reaktionsgas tritt aus den Kanälen 71 aus, passiert den perforierten Ringschuss 62, strömt in den zylindrischen Hohlraum 67, in den Raum 68 ein und wird über den Stutzen 60 aus dem Apparat herausgeführt. Der Wasserstrom gelangt in den Stutzen 78, in den gemeinsamen Sammler 77, wird auf die Sammler 76 jeder spiralförmigen Wand 72 gleichmässig verteilt und steigt in den Rohren 74, indem er teilweise verdampft und die bei der Reaktion entwickelte Wärme aufnimmt, wonach sich das Dampf-Flüssigkeit-Gemisch in den Sammlern 78 jeder Wand 72 ansammelt und weiterhin in den gemeisamen Sammler 79 gelangt, von wo es über den Stutzen 80 aus dem Apparat herausgeführt wird. Bei der Aufrechterhaltung eines konstanten Drucks in den Rohren 74 wird praktisch eine konstante Temperatur in der Zone des Verlaufs der Reaktion der Konvertierung von Kohlenoxid gewährleistet, d.h. ein isothermer Prozess sichergestellt.

Eine solche Konstruktion des Apparates ermöglicht die Verwendung eines besonders aktiven feinkörnigen Katalysators für die Konvertierung von Kohlenoxid bei einem hydraulischen Widerstand der Schicht etwa um das Fünffache geringer als bei den existierenden Apparaten, die Verringerung der Aussenabmessung des Apparates etwa um das Zweifache, die Durchführung der Konvertierung von Kohlenoxid in nur einem Apparat.

Gewerbliche Verwertbarkeit

Der gemäss der Erfindung ausgeführte Apparat zur Durchführung heispielsweise der Ammoniaksynthese, besitzt bei einer vorgegebenen Leistung eine etwa um das Zweifache verringerte Aussenabmessung oder gewährleistet unter Beibehaltung der früheren Aussenabmessung eine Leistungssteigerung bezogen auf Ammoniak ungefhahr um das Zweifache.

Der erfindungsgemäss ausgeführte Apparat zur Durchführung eines katalytischen Prozesses ermöglicht den Prozess der Dampf- und der Dampf-Luft-Konvertierung von Kohlenwasserstoffen unter Verwendung eines feinkörnigen Katalysators mit einer Korngrösse von 3 bis 5 mm bei einer Senkung des Kapitalaufwandes etwa um das Fünffache und einer Reduzierung von Schadstoffemissionen in die Umgebung ungefähr um das 10 bis 20 fache.

Der erfindungsgemässe Apparat gestattet es, den Prozess der Oxydation von Schwefeldioxid in der Schwefelsäureproduktion in Gegenwart eines feinkörnigen Katalysators mit 2 bis 6 mm Korngrösse unter Gewährleistung eines Gesamtoxydationsgrades des Gases von 99,9% zustandezubringen.

Ausserdem kann die Erfindung zur Durchführung von Adsorptionsprozessen, beispielsweise zur Trennung, zur Reinigung von Gas- oder Flüssigkeitsgemischen, zur Reinigung von Gasen oder Flüssigkeiten durch Filtration, zur Ionenaustauschfiltraten von Flüssigkeiten, z.B. des Speisewassers von Kesselanlagen u.a., erfolgreich angewendet werden.

**Patentansprüche**

1. Apparat zur Durchführung eines Katalytischen Prozesses in einer körnigen Schicht, enthaltend ein zylindrisches Gehäuse (1; 25; 56) mit Stutzen (3 und 5; 23 und 21; 58 und 60) für ein zuzuleitendes und ein abzuleitendes Medium, bei welchem Apparat entlang seiner Längsachse ($O_1$-$O_1$) innerhalb des Gehäuses (1, 25, 56) ein erster und ein zweiter perforierter Ringschuss (6 und 7, 35 und 36, 61 und 62) konzentrisch angeordnet sind, derart, dass zwischen der Aussenfläche des ersten perforierten Ringschusses (6, 35, 61) und der Innenfläche des Gehäuses (1, 25, 56) ein erster ringförmiger Raum (8, 37, 63) gebildet ist, während zwischen der Innenfläche des ersten perforierten Ringschusses (6, 35, 61) und der Aussenfläche des zweiten perforierten Ringschusses (7, 36, 62) ein zweiter ringförmiger Raum (9, 38, 64) gebildet ist, der zum Ausfüllen mit einem körnigen Material (18, 44, 73) bestimmt und in axialer Richtung durch zwei Trennwände (10, 11; 39 und 40; 65 und 66) begrenzt ist, von denen eine die Zone (14, 49, 69) des zuzuleitenden Mediums und die andere die Zone (13, 39a, 68) des abzuleitenden Mediums begrenzt, dadurch **gekennzeichnet,** dass im Inneren des zweiten ringförmigen Raumes (9,38, 64) zwischen den Trennwänden (10, 11, 39 und 40, 65 und 66) ein Mittel (15, 41, 70) zur Ausbildung mindestens eines Kanals (16, 42, 71) untergebracht ist, in dessen beliebigem Querschnitt, der zur Bewegungsrichtung des Mediumstroms senkrecht ist, der letztere eine vorgegebene Geschwindigkeit hat.

2. Apparat zur Durchführung eines katalytischen Prozesses in einer körnigen Schicht nach Anspruch 1, dadurch **gekennzeichnet,** dass jede Wand (17, 43, 72) des Kanals (16, 42, 71) in der zur Längsachse ($O_1$-$O_1$) des Apparates senkrechten Ebene die Form einer Flachspirale aufweist, die um einen auf der Achse ($O_1$-$O_1$) des Apparates liegenden Punkt verdreht ist, und durch die Kreise des ersten und des zweiten perforierten Ringschusses (6 und 7, 35 und 36, 61 und 62) begrenzt ist.

3. Apparat zur Durchführung eines katalytischen Prozesses in einer körnigen Schicht nach Anspruch 2, dadurch **gekennzeichnet** dass jede der Wände (17) des Kanals (16) aus einem flachen Blechmaterial gebildet ist.

4. Apparat zur Durchführung eines katalytischen Prozesses in einer körnigen Schicht nach Anspruch 2, dadurch **gekennzeichnet**, dass jede von den Wänden (72) eine Wärmeaustauschfläche darstellt, die von rohrförmigen Elementen (74) gebildet ist, welche über ihre Eingänge mit einem mit einer Wärmeträgerquelle verbundenen Eintrittssammler (76) verbunden sind, während sie über ihre Ausgänge mit einem Austrittssammler (78) für den Wärmeträger verbunden sind, wobei jeder der Sammler (76, 78) an einer der genannten zwei Trennwände (65, 66) befestigt ist.

5. Apparat zur Durchführung eines katalytischen Prozesses in einer körnigen Schicht nach Anspruch 2, dadurch **gekennzeichnet**, dass jede von den Wänden (43) eine Wärmeaustauschfläche darstellt, die einen Kastenquerschnitt ("a") in der durch den Krümmungshalbmesser der Wand (43) parallel zur Längsachse ($O_1$-$O_1$) des Apparates verlaufenden Ebene aufweist und mit dem Eintritts- und dem Austrittssammler (46, 47) in Verbindung steht, von denen jeder an einer der genannten zwei Trennwände (39, 40) befestigt und parallel zur Längsachse ($O_1$-$O_1$) des Apparates angeordnet ist.

6. Apparat zur Durchführung eines katalytischen Prozesses in einer körnigen Schicht nach Ansprüchen 2, 3 oder 2, 4 oder 2, 5, dadurch **gekennzeichnet,** dass in jedem Kanal (42) mindestens zwei Abstandsstücke (52) untergebracht sind, von denen jedes die Konstanz des Durchgangsquerschnitts des Kanals (42) sicherstellt und längs dem Krümmungshalbmesser der Wand (43), an welcher es befestigt ist, angeordnet ist.

7. Apparat zur Durchführung eines katalytischen Prozesses in einer körnigen Schicht nach Anspruch 5, dadurch **gekennzeichnet,** dass in ihm Abstandsstücke (53) vorgesehen sind, die zwischen den grösseren Seiten des Kastenquerschnitts ("a") untergebracht und zumindest an einer der grösseren Seiten des Kastenquerschnitts ("a") befestigt sind.

8. Apparat zur Durchführung eines katalytischen Prozesses in einer körnigen Schicht nach Ansprüchen 2 und 4 oder 2 und 5, dadurch **gekennzeichnet,** dass die Oberfläche des ersten perforierten Ringschusses (6) in der Abwicklung ein Rechteck mit einander abwechselnden perforierten Streifen (6a) und ungelochten Streifen (6b) darstellt, die längs der Erzeugenden des Ringschusses (6) angeordnet sind, wobei die Zone des Ringschusses (6) mit dem ungelochten Streifen (6b) an die Wand (17) des Kanals (16) so angrenzt, dass sie eine Fortsetzung dieser Wand (17) in der Bewegungsrichtung des Mediumstroms ist.

9. Apparat zur Durchführung eines katalytischen Prozesses in einer körniger Schicht nach Anspruch 2, dadurch **gekennzeichnet**, dass in jedem Kanal (42) ein spiralförmiger Kamm (54, 55) untergebracht ist, der über die Länge an einer der Trennwände (39, 40) starr befestigt ist und mit den Wänden (43) des Kanals (42) eine Labyrinthdichtung bildet.

FIG.1

FIG.2

FIG. 3

FIG.6

14

FIG.4

FIG. 5

FIG.7

FIG.8

FIG.9

FIG.10

FIG.11

FIG.12

# INTERNATIONAL SEARCH REPORT

International Application No PCT/SU 90/00129

**I. CLASSIFICATION OF SUBJECT MATTER** (if several classification symbols apply, indicate all) [6]

According to International Patent Classification (IPC) or to both National Classification and IPC

Int. Cl.[5] B 01 J 8/02

**II. FIELDS SEARCHED**

| Minimum Documentation Searched [7] | |
|---|---|
| Classification System | Classification Symbols |
| Int. Cl.[5] | B 01 J 8/00 ÷ 8/12 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 46888 (Ginzburg P.A.), 31 May 1936 (31.05.36), the claims, figures 1,2 | 1,4 |
| A | FR, B1, 1409120 (M. HALDOR FREDERIK AXEL TOPSØE), 12 July 1965 (12.07.65), pages 3,4, fig. 1,2 (cited in the description) | 1 |
| A | GB, A, 1194269 (BADISCHE ANILIN & SODA-FA-BRIK AKTIENGESELLSCHAFT), 10 June 1970 (10.06.70), page 3, lines 3-90 (cited in the description) | 1 |
| A | US, A, 4110081 (UOP INC.), 29 August 1978 (29.08.78), column 2, lines 26-68 | 1 |

----------

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 March 1991 (11.03.91) | 11 April 1991 (11.04.91) |
| International Searching Authority | Signature of Authorized Officer |
| ISA/SU | |

Form PCT/ISA/210 (second sheet) (January 1985)